# EUROPÄISCHE PATENTSCHRIFT

(11) **EP 1 070 607 B1**
(45) Veröffentlichungstag und Bekanntmachung des Hinweises auf die Patenterteilung: **03.12.2003**
(21) Anmeldenummer: 00112972.5
(22) Anmeldetag: 21.06.2000
(51) Int. Cl.: B60D 1/54, B60D 1/14

(54) **Abschleppeinrichtung für Fahrzeuge**
Vehicle towing device
Dispositif de remorquage d'un véhicule

(30) Priorität: 17.07.1999 DE 19933652
(43) Veröffentlichungstag der Anmeldung: 24.01.2001
(73) Patentinhaber: Dr.Ing. h.c.F. Porsche Aktiengesellschaft, 70435 Stuttgart (DE)
(72) Erfinder: Mahncke, Jürgen, 75233 Tiefenbronn (DE)

(56) Entgegenhaltungen:
- DE-A- 19 517 461
- DE-U- 1 865 806
- DE-U- 29 823 354
- FR-A- 2 730 672
- US-A- 2 309 850
- US-A- 3 717 362
- US-A- 3 754 418
- US-A- 5 433 547

## Beschreibung

Die Erfindung bezieht sich auf eine Abschleppeinrichtung für Fahrzeuge nach dem Oberbegriff des Anspruchs 1.

Aus der DE 44 23 633 C2 ist eine Abschleppöse mit einem Verbindungsbolzen bekannt, der zum Abschleppen mit dem Fahrzeug verbindbar ist und hierzu an seinem der Abschleppöse abgekehrten freien Ende einen Gewindeabschnitt aufweist. Wenn der Schleppvorgang beendet ist, wird der Verbindungsbolzen, beispielsweise vom Fahrzeugträger wieder gelöst und im Fahrzeug separat untergebracht.

Aufgabe der Erfindung ist es, eine Abschleppeinrichtung für Fahrzeuge zu schaffen, die einfach handhabbar im Fahrzeug angeordnet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß die Abschleppeinrichtung unverlierbar, d.h. derart mit dem Fahrzeug ständig verbunden ist, daß durch ein einfaches Herausziehen bzw. wieder Hineinschieben eine Schleppstellung bzw. eine Ruhestellung erzielbar ist. Diese Anordnung der Abschleppeinrichtung erleichtert die Handhabung, da eine örtliche, beispielsweise im Werkzeugset angeordnete Abschleppeinrichtung aufwendig in der Handhabung ist.

Der Verbindungsbolzen ist hierzu unverlierbar in einem Trägerteil des Fahrzeugaufbaus in einer Schleppstellung und in einer Ruhestellung gehalten. In der Schleppstellung ist der Verbindungsbolzen mit seinem Befestigungsabschnitt in einem Halteelement des Trägerteils zug- und druckfest festsetzbar. In der Ruhestellung wird der Verbindungsbolzen über eine benachbart eines Einhängeauges angeordnetes Arretiermittel im Halteelement befestigt.

Damit der Verbindungsbolzen nicht herausdrehbar ist, ist an seinem freien Ende ein Endanschlag vorgesehen, der in der Schleppstellung am Halteelement anliegt, so daß der Verbindungsbolzen in seiner Ausziehlänge begrenzt wird.

Damit der Verbindungsbolzen auch in der Ruhestellung eine feste Lage im Fahrzeug einnehmen kann, weist dieser Arretiermittel auf, die aus einem Gewindeabschnitt oder einem Haltering am Verbindungsbolzen oder im Halteelement bestehen können. Diese Arretiermittel weisen korrespondierende Rastungen bzw. Gewinde auf.

Nach einer weiteren vorteilhaften Ausführung der Erfindung, kann der Verbindungsbolzen im Halteelement auch über eine Art Bajonettverschluß festsetzbar sein.

Im eingeschobenen Ruhezustand ist der Verbindungsbolzen fest im Halteelement arretierbar, wozu in diesem oder auf dem Bolzen der Haltering vorgesehen ist. Dieser rastet in eine korrespondierende Ringnut oder dergleichen im Halteelement oder im Bolzen ein. Der Haltering kann aus einem Schnappring bzw. einem Federring oder einem Sicherungsring bestehen.

Zur verdeckten Anordnung der Abschleppeinrichtung im Fahrzeug ist der Verbindungsbolzen mit der Abschleppöse soweit ins Fahrzeug hineinschiebbar, daß die Öse zwischen einem Träger des Fahrzeugs und einer außenliegenden Abdeckhaube bzw. einer Bug- oder Heckschürze liegt. Die Schürze weist eine Öffnung auf, die von einer Schwenkklappe oder Deckel geschlossen werden kann.

Der Verbindungsbolzen kann im Fahrzeugträger angeordnet sein oder in einem auf dem Träger angeordneten Halteteil bzw. einer Konsole. Auch ist es möglich, den Verbindungsbolzen innerhalb eines Pralldämpfers zwischen Stoßstange und Querträger bzw. Aufbaustruktur anzuordnen.

Ausführungsbeispiele der Erfindung sind in den Zeichnungen dargestellt und werden im folgenden näher beschrieben.

Es zeigen
- Fig. 1: eine erste Ausführung einer Abschleppeinrichtung in einer Seitenansicht, teilweise im Schnitt in einem Träger einer Aufbaustruktur mit einer Gewindearretierung,

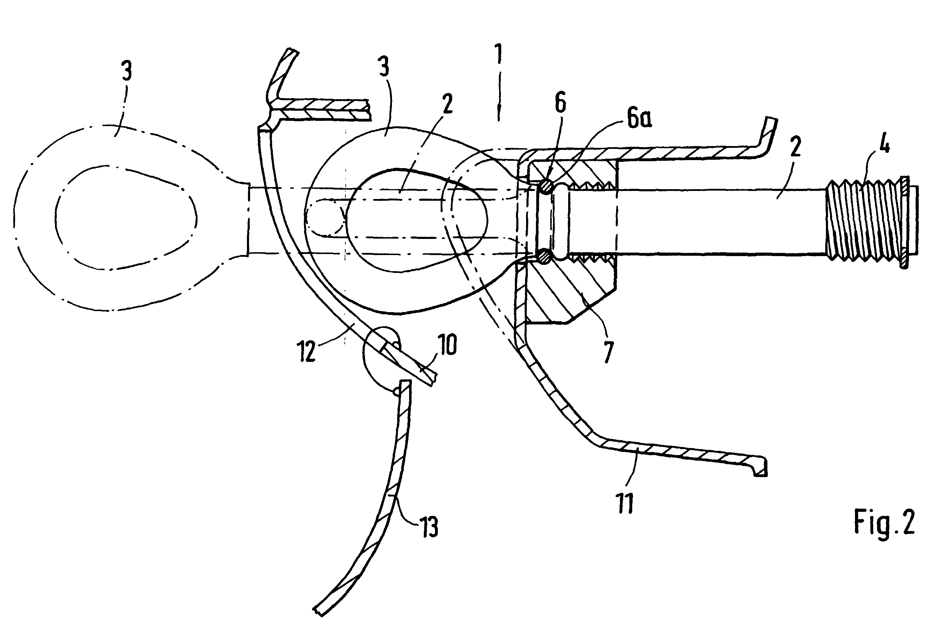

- Fig. 2: eine zweite Ausführung der Abschleppeinrichtung gemäß Fig. 1 mit einer Ringarretierung und

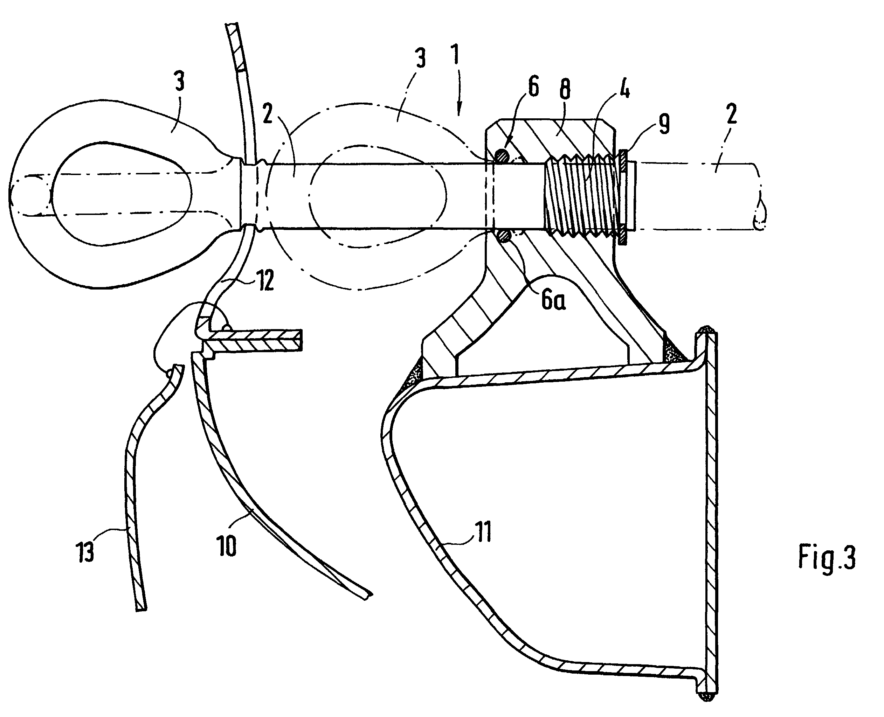

- Fig. 3: eine dritte Ausführung der Abschleppeinrichtung mit Anordnung auf einem Träger der Fahrzeugaufbaustruktur mit einer beispielsweise dargestellten Ringarretierung.

Die Abschleppeinrichtung 1 umfaßt im wesentlichen einen Verbindungsbolzen 2 mit einem Einhängeauge 3, der endseitig einen Befestigungsabschnitt 4 und benachbart des Einhängeauges 3 Mittel 5, 6 zum Festsetzen in der Aufbaustruktur aufweist.

Der Verbindungsbolzen 2 wird mittels des aus einem Gewinde 4 bestehenden Befestigungsabschnitts in einem Halteelement 7 bzw. in einem Halteelement 8 in einer Schleppstellung I festgesetzt, wobei der Verbindungsbolzen 2 in einer Ruhestellung II über die Mittel 5; 6 in einem eingeschobenen Zustand festsetzbar ist.

Der Befestigungsabschnitt 4 ist endseitig des Bolzens 2 mit einer Scheibe 9 oder dergleichen als Endanschlag versehen, damit der Bolzen 2 in der Schleppstellung I nicht aus dem Halteelement 7 herausdrehbar ist.

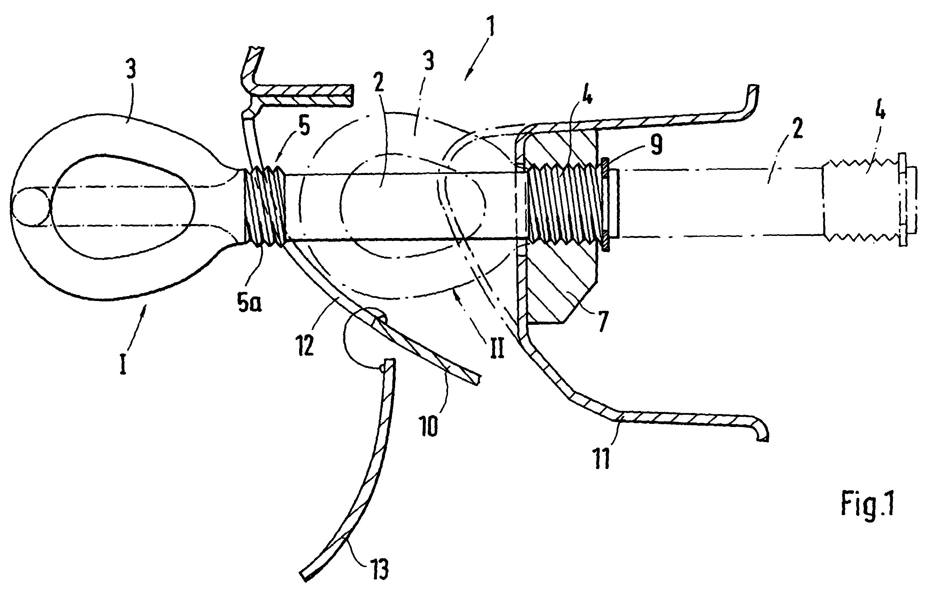

In Fig. 1 ist die Schleppstellung I in ausgezogenen Linien und in der Ruhestellung II in strichpunktierten Linien dargestellt. Die Haltemittel 5; 6 zum Festsetzen des Verbindungsbolzens 2 in der Ruhestellung II können aus einem Gewindeabschnitt 5a oder einem Haltering 6a bestehen. Der Gewindeabschnitt 5a ist in einer Gewindebohrung des Halteelements 7; 8 einschraubbar. Der Haltering 6a kann entweder im Halteelement 7; 8 oder auf dem Verbindungsbolzen 2 festgelegt sein; er rastet bzw. schnappt in eine korrespondierende Ringnut des Halteelements 7; 8 bzw. des Verbindungsbolzens 2 ein, wodurch der Verbindungsbolzen 2 fest in seiner Lage gehalten wird.

Der Verbindungsbolzen 2 kann statt des endseitigen Gewindeabschnitts 5a zum Festsetzen in der Ruhestellung II auch aus einem Bajonettverschluß oder ähnliches bestehen.

Zur verdeckten Anordnung der Schleppeinrichtung 1 im Fahrzeug ist der Verbindungsbolzen 2 mit seinem Einhängeauge 3 hinter einer Bug- und/oder Heckschürze bzw. einer Haube 10 angeordnet, wobei das Einhängeauge 3 zwischen der Schürze 10 und dem Träger 11 des Fahrzeugaufbaus liegt. Die Schürze 10 weist eine Öffnung 12 auf, durch welche die Abschleppeinrichtung 1 herauszuziehen ist. Diese Öffnung 12 kann über eine Klappe 13 bzw. eine Schwenkklappe verschlossen werden.

## Patentansprüche

1. Abschleppeinrichtung für Fahrzeuge mit einem Verbindungsbolzen zur Halterung am Fahrzeugaufbau und ein mit dem Bolzen verbundenes Einhängeauge, wobei der Verbindungsbolzen einen Befestigungsabschnitt sowie ein das Einhängeauge bildendes Ösenteil aufweist, **dadurch gekennzeichnet, daß** der Verbindungsbolzen (2) unverlierbar in einem Trägerteil (11) des Fahrzeugaufbaus in einer Schleppstellung (I) und in einer Ruhestellung (II) gehalten ist und in der Schleppstellung (I) mit dem Befestigungsabschnitt (4) in einem Halteelement (7; 8) des Trägerteils (11) zug- und druckfest festsetzbar ist und in der Ruhestellung (II) über eine benachbart des Einhängeauges (3) angeordnetes Arretiermittel (5; 6) im Halteelement (7; 8) befestigbar ist.

2. Abschleppeinrichtung nach Anspruch 1, **dadurch gekennzeichnet, daß** der Verbindungsbolzen (2) an seinem dem Einhängeauge (3) abgekehrten freien Ende als Befestigungsabschnitt (4) einen Gewindebereich mit einem Endanschlag (9) aufweist, der in der Schleppstellung (I) am Halteelement (7; 8) anliegt.

3. Abschleppeinrichtung nach den Ansprüchen 1 oder 2, **dadurch gekennzeichnet, daß** das Arretiermittel (5) einen Gewindebereich (5a) umfaßt, der in der Schleppstellung (I) in einer Gewindebohrung des Halteelements (7; 8) festsetzbar ist.

4. Abschleppeinrichtung nach Anspruch 1, **dadurch gekennzeichnet, daß** der Verbindungsbolzen (2) im Halteelement (7; 8) über einen Bajonettverschluß festsetzbar ist.

5. Abschleppeinrichtung nach den Ansprüchen 1 oder 2, **dadurch gekennzeichnet, daß** das Arretiermittel (6) einen Haltering (6a) umfaßt, der am Verbindungsbolzen (2) oder im Halteelement (7; 8) angeordnet ist.

6. Abschleppeinrichtung nach den Ansprüchen 1 oder 5, **dadurch gekennzeichnet, daß** der Haltering (6a) des Arretiermittels (6) in eine Ringnut des Halteelements (7; 8) einschnappend angeordnet ist.

7. Abschleppeinrichtung nach den Ansprüchen 1 oder 5, **dadurch gekennzeichnet, daß** der Haltering (6a) des Arretiermittels (6) in eine Ringnut des Verbindungsbolzens (2) einschnappend angeordnet ist.

8. Abschleppeinrichtung nach Anspruch 1, **dadurch gekennzeichnet, daß** der Verbindungsbolzen (2) mit Einhängeauge (3) in der Ruhestellung (II) verdeckt von einem Schürzenteil (10) des Kraftfahrzeugs zwischen diesem Schürzenteil (10) und dem Trägerteil (11) angeordnet ist.

9. Abschleppeinrichtung nach Anspruch 1, **dadurch gekennzeichnet, daß** das Schürzenteil (10) eine Durchführöffnung (12) für den Verbindungsbolzen (2) bzw. das Ösenteil (3) aufweist, und die Öffnung (12) über eine Klappe (13) abschließbar ist.

## Claims

1. A towing device for vehicles, with a connecting pin for retention on the vehicle body and a securing eye connected to the pin, wherein the connecting pin has a fastening portion and a lug part forming the securing eye, **characterized in that** the connecting pin (2) is held in a towing position (**I**) and in a rest position (**II**) in a captive manner in a support part (11) of the vehicle body, and in the towing position (**I**) it can be fixed to the fastening portion (4) in a retaining member (7; 8) of the support part (11) in a manner resistant to extension and compression and in the rest position (**II**) it can be fastened in the retaining member (7; 8) by way of a locking means (5; 6) arranged adjacent to the securing eye (3).

2. A towing device according to Claim 1, **characterized in that** the free end of the connecting pin (2) remote from the securing eye (3) has the fastening portion (4) in the form of a threaded region with an end stop (9) which rests against the retaining member (7; 8) in the towing position (**I**).

3. A towing device according to Claim 1 or 2, **characterized in that** the locking means (5) has a threaded region (5a) which in the towing position (I) can be fixed in a threaded bore in the retaining member (7; 8).

4. A towing device according to Claim 1, **characterized in that** the connecting pin (2) can be fixed in the retaining member (7; 8) by way of a bayonet closure.

5. A towing device according to Claim 1 or 2, **characterized in that** the locking means (6) comprises a retaining ring (6a) which is arranged on the connecting pin (2) or in the retaining member (7; 8).

6. A towing device according to Claim 1 or 5, **characterized in that** the retaining ring (6a) of the locking means (6) is arranged in a snap-in manner in an annular groove in the retaining member (7; 8).

7. A towing device according to Claim 1 or 5, **characterized in that** the retaining ring (6a) of the locking means (6) is arranged in a snap-in manner in an annular groove in the connecting pin (2).

8. A towing device according to Claim 1, **characterized in that** in the rest position (**II**) the connecting pin (2) with the securing eye (3) is arranged, covered by an apron portion (10) of the motor vehicle, between the said apron portion (10) and the support part (11).

9. A towing device according to Claim 1, **characterized in that** the apron portion (10) has a through-opening (12) for the connecting pin (2) or the lug part (3) respectively, and the opening (12) can be closed off by way of a flap (13).

## Revendications

1. Dispositif de remorquage de véhicule comportant une tige de liaison pour la fixation à la carrosserie du véhicule et comportant un oeillet d'accrochage relié à la tige, la tige de liaison comportant une section de fixation ainsi qu'une pièce en anneau formant l'oeillet d'accrochage, **caractérisé en ce que** la tige de liaison (2) est maintenue de manière imperdable dans un élément de support (11) de la carrosserie du véhicule dans une position de remorquage (I) et dans une position de repos (II), elle peut être fixée de manière résistante à la traction et à la pression dans la position de remorquage (II) avec la section de fixation (4), dans un élément de retenue (7 ; 8) de l'élément de support (11), et dans la position de repos (2) elle peut être fixée dans l'élément de retenue (7 ; 8), par un moyen d'arrêt (5 ; 6) disposé au voisinage de l'oeillet d'accrochage (3).

2. Dispositif de remorquage selon la revendication 1, **caractérisé en ce que** la tige de liaison (2) présente, à son extrémité libre tournée à l'opposé de l'oeillet d'accrochage (3), en tant que section de fixation (4), une zone filetée avec une butée de fin de course (9) qui, dans la position de remorquage (II), s'applique contre l'élément de retenue (7 ; 8).

3. Dispositif de remorquage selon les revendications 1 ou 2, **caractérisé en ce que** le moyen d'arrêt (5) comprend une zone filetée (5a) qui, dans la position de remorquage (I), peut être fixée dans un trou taraudé de l'élément de retenue (7 ; 8).

4. Dispositif de remorquage selon la revendication 1, **caractérisé en ce que** la tige de liaison (2) peut être fixée dans l'élément de retenue (7 ; 8) par une fermeture à baïonnette.

5. Dispositif de remorquage selon les revendications 1 ou 2, **caractérisé en ce que** le moyen d'arrêt (6) comprend une bague de retenue (6a) qui est disposée sur la tige de liaison (2) ou dans l'élément de retenue (7 ; 8).

6. Dispositif de remorquage selon les revendications 1 ou 5, **caractérisé en ce que** la bague de retenue (6a) du moyen d'arrêt (6) est disposée de manière à se clipser dans une rainure annulaire de l'élément de retenue (7 ; 8).

7. Dispositif de remorquage selon les revendications 1 ou 5, **caractérisé en ce que** la bague de retenue (6a) du moyen d'arrêt (6) est disposée de manière à se clipser dans une rainure annulaire de la tige de liaison (2).

8. Dispositif de remorquage selon la revendication 1, **caractérisé en ce que** la tige de liaison (2) avec l'oeillet d'accrochage (3) est disposée dans la position de repos (II) entre une partie de tablier (10) du véhicule automobile et l'élément de support (11) dissimulé par cette partie de tablier (10).

9. Dispositif de remorquage selon la revendication 1, **caractérisé en ce que** la partie de tablier (10) présente une ouverture de passage (12) pour la tige de liaison (2) ou la partie d'oeillet (3), et l'ouverture (12) peut être fermée par un clapet (13).
